# FASCICULE DE BREVET EUROPEEN

(11) **EP 0 950 002 B1**
(45) Date de publication et mention de la délivrance du brevet: **24.10.2001**
(21) Numéro de dépôt: 97953975.6
(22) Date de dépôt: 30.12.1997
(51) Int. Cl.: B60R 5/04

(54) **VEHICULE AUTOMOBILE COMPORTANT UNE TABLETTE ARRIERE RIGIDE ET AMOVIBLE, INTEGRABLE DANS UN PLANCHER DE CHARGE**
KRAFTFAHRZEUG MIT EINER HINTEREN, ENTFERNBAREN, STEIFEN ABDECKPLATTE, INTEGRIERBAR IN EINEN GEPÄCKRAUMBODEN
MOTOR VEHICLE COMPRISING A RIGID REMOVABLE REAR WINDOW SHELF, INTEGRAL IN A LOAD FLOOR

(30) Priorité: 31.12.1996 FR 9616307
(43) Date de publication de la demande: 20.10.1999
(73) Titulaire: RENAULT, 92109 Boulogne-Billancourt (FR)
(72) Inventeur: BERTHOLON, Patrick, F-92310 Sèvres (FR); VELAY, Michel, F-78640 Saint Germain de la Grange (FR)
(86) Numéro de dépôt international: FR9702453
(87) Numéro de publication internationale: WO9829278

(56) Documents cités:
- DE-A- 2 647 104
- DE-A- 2 927 180
- FR-A- 1 539 656
- US-A- 3 393 936

## Description

L'invention concerne un véhicule automobile qui comporte une tablette arrière rigide et amovible, intégrable dans un plancher de charge, ainsi que ledit plancher de charge conformé pour recevoir ladite tablette tout en permettant de conserver une bonne stabilité du chargement.

Généralement, les véhicules automobiles qui sont munis d'un hayon d'accès au coffre à bagages, comportent une tablette arrière disposée entre la partie supérieure de la banquette arrière et ledit hayon. Cette disposition permet d'occulter le contenu du coffre à bagages totalement ou partiellement. Afin de rendre le chargement plus facile lors de l'ouverture du hayon, la tablette arrière pivote autour d'un axe transversal situé à proximité de la banquette arrière.

Dans le cas d'un véhicule dont la banquette arrière est transformable de manière à créer un prolongement du plancher de charge et une augmentation de la capacité de chargement, il est généralement nécessaire de retirer la tablette arrière.

De ce fait la tablette devient un objet inutile et encombrant qui risquerait d'être abîmée si elle était placée avec le chargement.

La publication FR-A-2611619 décrit une tablette arrière pliante correspondant à celle du préambule de la revendication 1, qui coopère avec une banquette arrière transformable, pour augmenter la capacité de chargement du véhicule automobile. Les différents agencements de la tablette, sans démontage de la liaison pivotante réalisée sur le dossier de la banquette arrière, permettent de mettre ladite tablette dans une position ne gênant pas le chargement d'objets.

Une telle tablette est constituée de plusieurs pièces ce qui en augmentent le coût et le risque de bruit dus aux tolérances des différentes articulations. Dans certaines positions de la banquette arrière, le chargement peut être en appui contre la tablette et réaliser ainsi des contraintes sur ses axes d'articulations. De telles contraintes peuvent être une cause de détérioration de la tablette.

Afin de remédier à ces inconvénients, l'invention a pour objet un véhicule automobile qui comporte une tablette arrière pouvant être intégrée dans le plancher de charge tout en conservant une zone de chargement sensiblement plane.

L'invention a également pour objet un véhicule automobile qui comporte un plancher de charge pouvant recevoir une tablette arrière qui autorise une bonne stabilité du chargement avec ou sans la tablette arrière intégrée dans ledit plancher de charge.

L'invention a également pour objet un véhicule automobile dont la tablette arrière comporte une zone plane dont les matériaux et le traitement de la surface autorise le contact avec un chargement.

Selon l'invention, le plancher de charge comporte une empreinte, correspondant à la forme de ladite peau supérieure relative audit profil de rigidification, qui divise ledit plancher de charge en une surface plane intérieure et une surface plane extérieure.

Selon une autre caractéristique de l'invention, la surface plane intérieure est en retrait par rapport à la surface plane extérieure d'une valeur sensiblement égale à l'épaisseur de la partie plane de la tablette.

Selon une autre caractéristique de l'invention, un revêtement de recouvrement du plancher de charge comporte une surépaisseur, située sur la face en contact avec ledit plancher de charge, correspondant sensiblement à la surface plane intérieure et à la valeur du retrait de ladite surface plane intérieure par rapport à la surface plane extérieure.

Selon une autre caractéristique de l'invention, la surface plane intérieure comporte un accès à un logement de roue de secours.

Selon une autre caractéristique de l'invention, l'empreinte comporte une zone de réception d'un axe de pivotement de la tablette.

Selon une autre caractéristique de l'invention, la peau inférieure, relative à la partie plane de la tablette, est recouverte d'un revêtement plastifié résistant au chargement.

Selon une autre caractéristique de l'invention, le revêtement plastifié comporte des bossages longitudinaux.

D'autres caractéristiques et avantages de l'invention apparaîtront à la lecture de la description d'exemples de réalisation d'une tablette arrière en référence aux dessins annexés dans lesquels :
- la figure 1 représente une vue perspective d'un véhicule dont le hayon est ouvert, la tablette et le plancher de charge correspondants aux enseignements de l'invention,
- la figure 2 représente une coupe transversale de la tablette,
- la figure 3 représente une coupe transversale de l'empreinte réalisée dans le plancher, selon un premier mode de réalisation,
- la figure 4 représente une coupe transversale de la tablette intégrée dans l'empreinte du plancher de charge représentée à la figure 3,
- la figure 5 représente une coupe transversale de l'empreinte réalisée dans le plancher, selon un second mode de réalisation,
- la figure 6 représente une coupe transversale de la tablette intégrée dans l'empreinte du plancher de charge représentée à la figure 5,

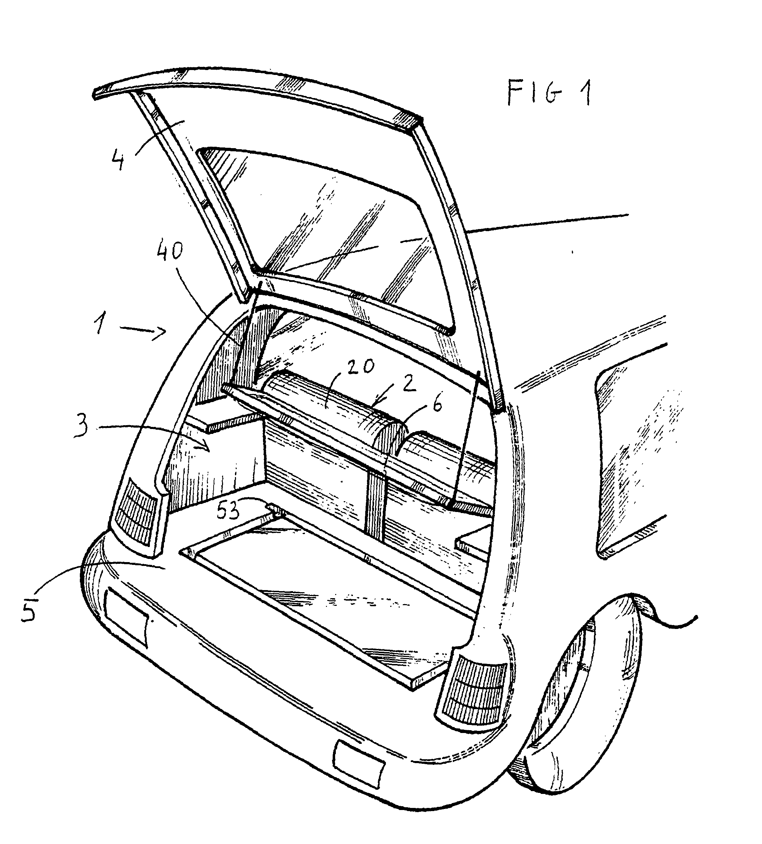

Tel que représenté à la figure 1, un véhicule 1 comporte une banquette arrière 2, réalisée en une seule ou plusieurs parties, qui délimite un coffre à bagages 3 fermé par un hayon 4. La fermeture du coffre à bagages 3 par l'intermédiaire d'un hayon 4 est prise ici à titre d'exemple, tout autre dispositif de fermeture étant compatible avec l'invention. Le coffre à bagages 3 possède un plancher 5 définissant un espace de chargement sensiblement plan. L'espace de chargement est obturé par une tablette 6 positionnée au niveau de la partie supérieure du dossier 20 de la banquette arrière 2.

La tablette arrière 6 est montée à pivotement, autour d'un axe transversal porté par des éléments fixes de la structure du véhicule automobile 1 ou par la partie arrière du dossier 20 de banquette arrière 2. La tablette 6 peut être en liaison avec le hayon 4 par l'intermédiaire de câble 40, par exemple, afin de permettre le pivotement de ladite tablette 6 lors de l'ouverture dudit hayon 4.

Tel que représenté à la figure 2, la tablette 6 est constituée, au moins, d'une partie plane 60 bordée d'un profil de rigidification 61 délimités par une peau supérieure 63 et une peau inférieure 64. La tablette 6 comporte une structure 62 moulée dans un matériau plastique, par exemple. La peau supérieure 63 de la tablette 6 est réalisée avec un matériau d'habillage collé sur la structure 62. La peau inférieure 64, plus particulièrement au niveau de la partie plane 60, est recouverte d'un revêtement plastifié résistant au chargement. La peau inférieure 64 peut être réalisée directement par la structure 62 de la tablette 6 où des formes locales spécifiques et un aspect de surface particulier peuvent être prévus. La partie plastifiée peut être porteuse de bossages longitudinaux (non représentés), afin d'améliorer le glissement d'objets plans encombrants en diminuant la surface de frottement. Les bossages peuvent aussi améliorer la rigidité de la partie plane 60 de la tablette 6.

Le plancher de charge 5 est un plan, en tôle métallique par exemple, dans lequel est réalisée une empreinte 50 complémentaire à la forme de la peau supérieure 63 de la tablette 6. L'empreinte 50 correspondant plus particulièrement à la forme du profil 61 divise le plancher de charge 5 en une surface plane extérieure 51 et une surface plane intérieure 52.

Si l'axe de pivotement est extérieur aux limites de la tablette 6 définies par le profil 50, une zone de réception 53 permettant l'intégration dudit axe, sera prévue dans le plancher 5, telle que représentée à la figure 1.

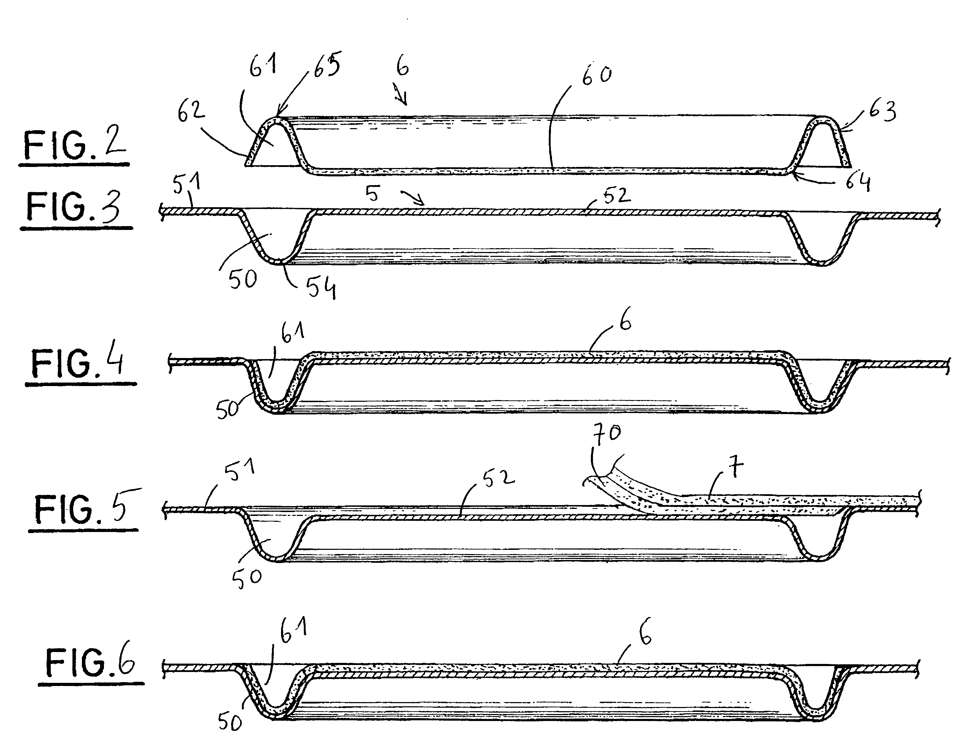

Suivant un premier mode de réalisation du plancher de charge 5 représenté à la figure 3, la surface plane intérieure 52 est au même niveau que la surface plane extérieure 51.

Selon un second mode de réalisation du plancher de charge 5 représenté à la figure 5, la surface plane intérieure 52 est en retrait par rapport à la surface plane extérieure 51.

Lorsque l'on souhaite charger le coffre à bagages 3 avec un ou plusieurs objets encombrants il est nécessaire de démonter la tablette 6 de ses axes de pivotements, de la retourner de façon à faire correspondre la peau supérieure 63 de la dite tablette 6 avec l'empreinte 50 réalisée à cet effet, dans le plancher de charge 5. Afin de ne pas mettre la tablette 6 en contact avec une accumulation de poussière, il est possible de prévoir un jeu entre le sommet 65 du profil 61 et le fond 54 de l'empreinte 50.

Si le plancher de charge 5 a été réalisé selon le premier mode de réalisation, la partie plane 60 de la tablette 6 sera en proéminence par rapport à la surface de chargement réalisée par les surfaces planes intérieure 52 et extérieure 51. Dans ce cas le bord extérieur 66 de la tablette 6 pourra être en retrait par rapport à la partie plane inférieure 64 de ladite tablette 6 afin de ne pas dépasser de l'empreinte réalisée dans le plancher, tel que représenté à la figure 4. La surface de la tablette 6 étant importante par rapport à la surface du plan de chargement, la proéminence de ladite tablette 6 ne sera pas déséquilibrante pour le chargement.

Si le plancher de charge 5 a été réalisé selon le second mode de réalisation, la partie plane 60 de la tablette 6 sera dans la continuité de la surface plane extérieure 51. L'intégration de la tablette 6 dans le plancher de charge 5 permettra alors la création d'un plan de chargement continu, seul les bossages éventuels feront un relief.

Dans les deux modes de réalisation la surface plane intérieure 52 peut recevoir une trappe d'accès à un logement de roue de secours, tel que réalisé dans la plupart des véhicules automobiles.

Les espaces de chargement des véhicules automobiles étant généralement recouverts d'un revêtement amovible tel qu'une moquette, l'empreinte 50 réalisée dans le plancher 5 peut être dissimulée par ladite moquette. De ce fait, lors de l'intégration de la tablette 6 dans le plancher de charge 5, il sera nécessaire d'enlever la moquette avant d'effectuer le rangement de ladite tablette 6. Dans ce cas la peau inférieure 64 de la tablette 6 ne sera pas en contact direct avec le chargement. Le traitement de la peau inférieure 64 pourra être simplifié ou traité selon une optique plus esthétique.

Si le plancher de charge 5 a été conçu selon le second mode de réalisation, un revêtement de recouvrement 7, tel qu'une moquette, du plan de chargement peut être pourvue d'une surépaisseur locale 70 rattrapant la différence de niveau entre les surfaces planes intérieure 52 et extérieure 51. L'intégration de la tablette 6 dans l'empreinte 50 du plancher 5 provoquera alors une remontée locale du revêtement 7 créant des conditions de chargement similaires au premier mode de réalisation du plancher 5.

La description ci-dessus comprend les différentes variantes de tablettes rigides, qu'elles soient ou non montées à pivotement. On pourra aussi considérer comme entrant dans le champ d'application de l'invention, les tablettes rigides intégrant un rideau souple d'obturation.

## Revendications

1. Véhicule automobile comportant une tablette rigide (6) qui obture partiellement ou totalement un coffre à bagages (3), délimité par un plancher de charge (5), en sa partie de chargement, la tablette rigide (6) étant constituée, d'au moins, une surface plane (60) bordée d'un profil de rigidification (61) délimités par une peau supérieure (63) et une peau inférieure (64), **caractérisé en ce que** le plancher de charge (5) comporte une empreinte (50), correspondant à la forme de ladite peau supérieure (63) relative audit profil de rigidification (61), qui divise ledit plancher de charge (5) en une surface plane intérieure (52) et une surface plane extérieure (51).

2. Véhicule automobile selon la revendication 1, **caractérisé en ce que** la surface plane intérieure (52) est en retrait par rapport à la surface plane extérieure (51) d'une valeur sensiblement égale à l'épaisseur de la partie plane (60) de la tablette (6).

3. Véhicule automobile selon la revendication 2, **caractérisé en ce qu'**un revêtement de recouvrement (7) du plancher de charge (5) comporte une surépaisseur (70), située sur la face en contact avec ledit plancher de charge (5), correspondant sensiblement à la surface plane intérieure (52) et à la valeur du retrait de ladite surface plane intérieure (52) par rapport à la surface plane extérieure (51).

4. Véhicule automobile selon l'une quelconque des revendications 1 à 3, **caractérisé en ce que** la surface plane intérieure (52) comporte un accès à un logement de roue de secours.

5. Véhicule automobile selon la revendication 1, **caractérisé en ce que** l'empreinte (50) comporte une zône de réception (53) d'un axe de pivotement de la tablette (6).

6. Véhicule automobile selon la revendication 1, **caractérisé en ce que** la peau inférieure (64), relative à la partie plane (60) de la tablette (6), est recouverte d'un revêtement plastifié résistant au chargement.

7. Véhicule automobile selon la revendication 6, **caractérisé en ce que** le revêtement plastifié comporte des bossages longitudinaux.

## Patentansprüche

1. Kraftfahrzeug mit einer starren Ablage (6), die einen Kofferraum (3) ganz oder teilweise verschließt, der in seinem Ladeteil durch einen Laderaumboden (5) begrenzt wird, wobei die genannte starre Ablage durch mindestens eine ebene Fläche (60) gebildet wird, an deren Rand sich ein Versteifungsprofil (61) befindet, wobei diese durch eine obere Haut (63) und eine untere Haut (64) begrenzt sind, **dadurch gekennzeichnet, dass** der Laderaumboden (5) eine Vertiefung (50) umfasst, die der Form der genannten oberen Haut (63) im Bereich des genannten Versteifungsprofils (61) entspricht und die den genannten Laderaumboden (5) in eine innere ebene Fläche (52) und eine äußere ebene Fläche (52) unterteilt.

2. Kraftfahrzeug nach Anspruch 1, **dadurch gekennzeichnet, dass** die innere ebene Fläche (52) gegenüber der äußeren ebenen Fläche (51) um einen Wert abgesenkt ist, der annähernd der Dicke des ebenen Teils (60) der Ablage (6) entspricht.

3. Kraftfahrzeug nach Anspruch 2, **dadurch gekennzeichnet, dass** eine Abdeckung (7) des Laderaumbodens (5) eine Überdicke (70) aufweist, die an der mit dem genannten Laderaumboden (5) in Kontakt befindlichen Seite angeordnet ist und die annähernd der inneren ebenen Fläche (52) und dem Wert der Absenkung der genannten inneren ebenen Fläche (52) gegenüber der äußeren ebenen Fläche (51) entspricht.

4. Kraftfahrzeug nach einem der Ansprüche 1 bis 3, **dadurch gekennzeichnet, dass** die innere ebene Fläche (52) einen Zugang zu einer Aufnahme für ein Reserverad umfasst.

5. Kraftfahrzeug nach Anspruch 1, **dadurch gekennzeichnet, dass** die Vertiefung (50) einen Bereich (53) zur Aufnahme einer Schwenkachse der Ablage (6) umfasst.

6. Kraftfahrzeug nach Anspruch 1, **dadurch gekennzeichnet, dass** die untere Haut (64) im Bereich des ebenen Teils (60) der Ablage (6) mit einem Kunststoffüberzug versehen ist, der widerstandsfähig gegenüber der Ladung ist.

7. Kraftfahrzeug nach Anspruch 6, **dadurch gekennzeichnet, dass** der Kunststoffüberzug Längsbuckel umfasst.

## Claims

1. Automotive vehicle having a rigid tray (6) which partially or totally covers a luggage compartment (3), delimited by a loading floor (5) in its loading part, the rigid tray (6) being constituted by at least one flat surface (60) edged with a stiffening profile (61) delimited by an upper skin (63) and a lower skin (64), **characterised in that** the loading floor (5) comprises an indentation (50) corresponding to the shape of said upper skin (63) relative to said stiffening profile (61), which divides said loading floor (5) into an interior flat surface (52) and an exterior flat surface (51).

2. Automotive vehicle according to claim 1, **characterised in that** the interior flat surface (52) is set back with respect to the exterior flat surface (51) by a value substantially equal to the thickness of the flat part (60) of the tray (6).

3. Automotive vehicle according to claim 2, **characterised in that** a covering cladding (7) of the loading floor (5) has an allowance (70) located on the face in contact with said loading floor (5), substantially corresponding to the interior flat surface (52) and to the value of the setting back of said interior flat surface (52) with respect to the exterior flat surface (51).

4. Automotive vehicle according to any one of claims 1 to 3, **characterised in that** the interior flat surface (52) has an access to a spare wheel housing.

5. Automotive vehicle according to claim 1, **characterised in that** the indentation (50) has a receiving zone (53) for an axle for pivoting the tray (6).

6. Automotive vehicle according to claim 1, **characterised in that** the lower skin (64) relative to the flat part (60) of the tray (6) is covered with a loading-resistant plastic-coated cladding.

7. Automotive vehicle according to claim 6, **characterised in that** the plastic-coated cladding has longitudinal bosses.
